(19) Europäisches Patentamt

European Patent Office

Office européen des brevets

(11) **EP 1 978 581 A1**

(12) **EUROPEAN PATENT APPLICATION**

(43) Date of publication:
**08.10.2008 Bulletin 2008/41**

(51) Int Cl.:
*H01M 4/86* (2006.01)        *H01M 8/02* (2006.01)
*H01M 8/10* (2006.01)

(21) Application number: **08250923.3**

(22) Date of filing: **17.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.03.2007 JP 2007080317**

(71) Applicant: **Kabushiki Kaisha Toshiba**
**Minato-ku,**
**Tokyo 105-8001 (JP)**

(72) Inventors:
- **Kawano, Koichiro,**
  **IP Division, Toshiba Corporation**
  **Minato-ku,**
  **Tokyo (JP)**

- **Sato, Yuusuke,**
  **IP Division, Toshiba Corporation**
  **Minato-ku,**
  **Tokyo (JP)**
- **Yagi, Ryosuke,**
  **IP Division, Toshiba Corporation**
  **Minato-ku,**
  **Tokyo (JP)**
- **Akita, Masato,**
  **IP Division, Toshiba Corporation**
  **Minato-ku,**
  **Tokyo (JP)**

(74) Representative: **Granleese, Rhian Jane**
**Marks & Clerk**
**90 Long Acre**
**London**
**WC2A 9RA (GB)**

(54) **Fuel cell**

(57) A fuel cell includes a membrane electrode assembly including an electrolyte membrane, and anode and cathode electrodes sandwiching the electrolyte membrane therebetween; a gas/liquid separation layer provided at an opposite side of the anode electrode with the electrolyte membrane; an auxiliary porous layer provided on the gas/liquid separation layer; and an anode passage plate provided on the auxiliary porous layer, including a fuel passage, wherein the auxiliary porous layer is softer than the gas/liquid separation layer and the anode passage plate, and including lyophobic, electric conductive and gas permeability properties.

**FIG. 1**

EP 1 978 581 A1

**Description**

CROSS REFERENCE TO RELATED APPLICATIONS AND INCOORPORATED BY REFERRENCE

The application is based upon and claims the benefit of priority from the prior Japanese Patent Applications No. P2007-080317, filed on March 26, 2007; the entire contents of which are incorporated herein by reference.

BACKGROUND OF THE INVENTION

1. Field of the Invention

The present invention relates to a fuel cell, more particularly, to a direct methanol fuel cell.

2. Description of the Related Art

In a direct methanol fuel cell, there is a known method to provide a gas/liquid separation structure on an anode side of the cell, and to separate gas ($CO_2$ gas) generated in a reaction in the anode side from liquid fuel and water. In the conventional gas/liquid separation structure on the anode side, a lyophobic or lyophilic gas/liquid separation layer is provided between an anode passage plate and an anode electrode, and the gas/liquid separation is performed by the gas/liquid separation layer. In such a way, an anode circulation system in the fuel cell is unnecessary or can be miniaturized, so as to contribute to miniaturization of the entire system of the fuel cell.
However, in the conventional gas/liquid separation structure on the anode side, a complicated structure includes a plural of parts, and accordingly, it is difficult to integrally mold the gas/liquid separation structure. Moreover, it is impossible to use a material containing a solvent, such as an adhesive, that adversely affects the electrode, and a material from which metal ions are eluted. Therefore, the individual parts are positioned, stacked on one another, and pressed after being prepared. However, there is a case where a gap occurs between the anode passage plate and the lyophobic or lyophilic gas/liquid separation layer. In this case, the fuel will leak to a gas passage side, and there is a possibility that the function of the gas/liquid separation is not performed.

SUMMARY OF THE INVENTION

An object of the present invention is to provide a fuel cell with improve reliability for gas/liquid separation provided on an anode side in a direct methanol fuel cell.
An aspect of the present invention inheres in a fuel cell including: a membrane electrode assembly including an electrolyte membrane, and anode and cathode electrodes sandwiching the electrolyte membrane there between; a gas/liquid separation layer provided at an opposite side of the anode electrode with the electrolyte membrane, and configured to separate fluid generated by a reaction in the anode electrode into gas and liquid; an auxiliary porous layer provided on the gas/liquid separation layer; and an anode passage plate provided on the auxiliaryporous layer, including a fuel passage supplying a fuel to the anode electrode and a gas passage discharging the gas, wherein the auxiliary porous layer is softer than the gas/liquid separation layer and the anode passage plate, and includes lyophobic, electric conductive and gas permeability properties.

BRIEF DESCRIPTION OF DRAWINGS

Fig. 1 is a cross-sectional view showing a fuel cell according to a first embodiment of the present invention;
Figs. 2 to 4 are enlarged views of essential parts of the fuel cell according to the first embodiment of the present invention;
Fig. 5 is a cross-sectional view showing a fuel cell according to a second embodiment of the present invention; and
Figs. 6 and 7 are enlarged views of essential parts of the fuel cell according to the second embodiment of the present invention.

DETAILED DESCRIPTION OF THE INVENTION

Various embodiments of the present invention will be described with reference to the accompanying drawings. It is tobe noted that the same or similar reference numerals are applied to the same or similarparts and elements throughout the drawings, and the description of the same or similar parts and elements will be omitted or simplified.

Generally and as it is conventional in the representation of devices, it will be appreciated that the various drawings are not drawn to scale from one figure to another nor inside a given figure, and in particular that the layer thicknesses are arbitrarily drawn for facilitating the reading of the drawings.

(FIRST EMBODIMENT)

A direct methanol fuel cell (DMFC) using methanol as a fuel will be described as a first embodiment of the present invention.

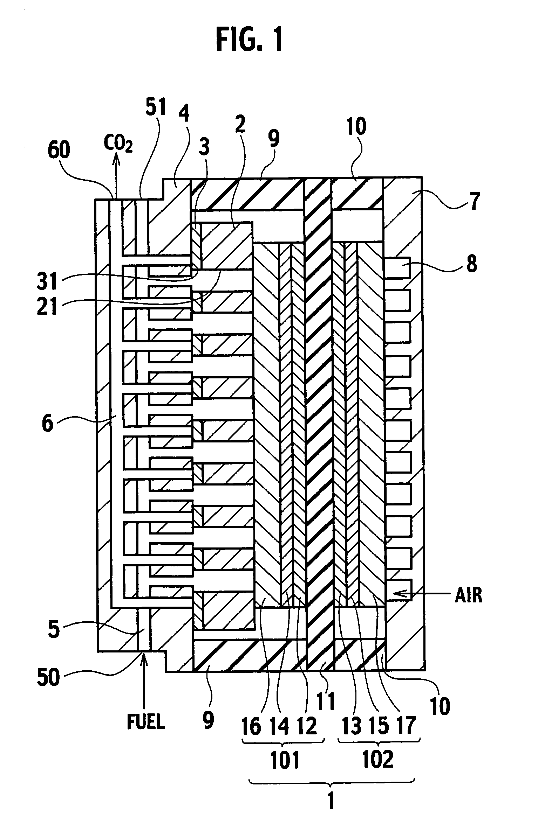

As shown in FIG. 1, the fuel cell according to the first embodiment of the present invention includes: a membrane electrode assembly (MEA) 1 having an electrolyte membrane 11, and anode and cathode electrodes 101 and 102 opposite to eachotherwhile sandwiching the electrolyte membrane 11 therebetween; a gas/liquid separation layer 2 that is provided on an opposite surface of the anode electrode 101 with the electrolyte membrane 11 and separates fluid generated by a reaction in the anode electrode 101 into gas and liquid; an anode passage plate (anode collector) 4 having a fuel passage 5 that supplies the fuel to the anode electrode 101, and a gas passage 6 that discharges the gas therefrom; and an auxiliary porous layer 3 that is disposed between the gas/liquid separation layer 2 and the anode passage plate 4 and is softer than the gas/liquid separation layer 2 and the anode passage plate 4. The layer 3 includes lyophobic, electric conductivity, and gas permeability properties.

In the membrane electrode assembly 1, the anode electrode 101 is composed of an anode catalyst layer 12, a carbon micro porous layer 14, and an anode gas diffusion layer 16. Moreover, the cathode electrode 102 is composed of a cathode catalyst layer 13, a carbon micro porous layer 15, and a cathode gas diffusion layer 17.

The electrolyte membrane 11 has a proton ($H^+$) -conductive polymer electrolyte membrane, such as a Nation membrane (registered trademark) . For the anode catalyst layer 12, for example, platinum ruthenium (PtRu) and the like can be used. For the cathode catalyst layer 13, for example, platinum (Pt) and the like can be used. For the anode gas diffusion layer 16, for example, a water repellent treatment is implemented by polytetrafluoroethylene (PTFE) for commercially available carbon paper. As the cathode gas diffusion layer 17, for example, commercially available carbon cloth attached to the carbon micro porous layer is usable. The anode gas diffusion layer 16 smoothly supplies fuel to the anode catalyst layer 12, discharges a product generated by an anode reaction, and collects current. The cathode gas diffusion layer 17 smoothly supplies air to the cathode catalyst layer 13, discharges a product generated by a cathode reaction, and collects current.

The gas/liquid separation layer 2 provides the properties of electric conductivity, lyophobic (water repellency), and gas permeability. As the gas/liquid separation layer 2, a porous layer such as carbon paper, carbon cloth and carbon nonwoven fabric is usable.

The auxiliary porous layer 3 has higher degree of softness than the gas/liquid separation layer 2 and the anode passage plate 4, and is lyophobic (water repellency), electric conductive, and gas permeability. As the auxiliary porous layer 3, a micro porous layer (MPL) is usable. It is possible to manufacture the MPL in such a manner that carbon powder and the PTFE are mixed as slurry by use of a solvent, followed by baking at about 380°C.

In the anode passage plate 4, the fuel passage 5 and the gas passage 6 are formed. The fuel passage 5 supplies the fuel or a fuel solution from a fuel supply port 50 to the anode electrode 101, and discharges the fuel solution that is not reacted in the anode electrode 101, and the like from a fuel discharge port 51. The gas passage 6 discharges the gas ($CO_2$ gas) generated by the anode reaction from a gas discharge port 60. Anode-side openings of the fuel passage 5 are positionally aligned with openings 31 of the auxiliary porous layer 3 and openings 21 of the gas/liquid separation layer 2. Anode-side openings of the gas passage 6 are in contact with the auxiliary porous layer 3.

A cathode collector (cathode passage plate) 7 is disposed on an outside of the cathode gas diffusion layer 17. The cathode collector 7 supplies the air from openings 8 to the cathode electrode 102, and collects current. An anode gasket 9 and a cathode gasket 10 prevent leakage of the fuel and the air to the outside.

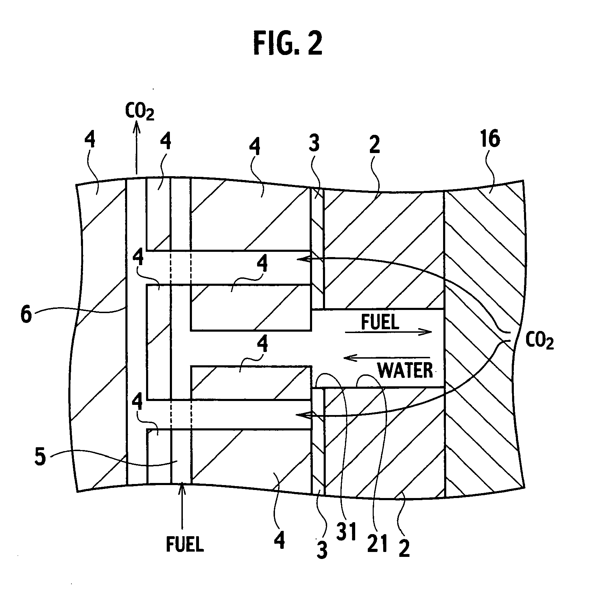

In the fuel cell according to the first embodiment of the present invention, as shown in FIG. 2, the methanol solution passes through the fuel passage 5, and is supplied to the anode electrode 101 through the openings 31 of the auxiliary porous layer 3 and the openings 21 of the gas/liquid separation layer 2. At the same time, the air is taken in from the openings 8 of the cathode collector 7, and is supplied to the cathode electrode 102. The reactions in the anode electrode 101 and the cathode electrode 102 are represented by Reaction formulas (1) and (2), respectively.

$$CH_3OH+H_2O \rightarrow 6H^+6e^-+CO_2 \qquad (1)$$

$$6H^++6e^-+3/2O_2 \rightarrow 3H_2O \qquad (2)$$

Protons ($H^+$) generated in the anode reaction flow into the cathode electrode 102 through the electrolyte membrane 11. Electrons ($e^-$) generated in the anode reaction are carried to the cathode electrode 102 via the anode passage plate 4, an external circuit (not shown), and the cathode collector 7. $CO_2$ generated in the anode reaction is more likely to pass through the lyophobic gas/liquid separation layer 2 than to form air bubbles in the liquid in the fuel passage 5, and accordingly, permeates the lyophobic gas/liquid separation layer 2 and the auxiliary porous layer 3, and is discharged from the gas passage 6. A part of the water that is not reacted in the anode electrode 101 is mixed with the methanol solution in the fuel passage 5, and the rest thereof permeates the electrolyte membrane 11, and is discharged from the cathode electrode 102 to the outside. A part of the water generated in the cathode reaction is reversely diffused to the anode catalyst layer 12 side through the electrolyte membrane 11, and the rest thereof is discharged from the openings 8 of the cathode collector 7 to the outside.

At this time, since the auxiliary porous layer 3 having higher degree of softness than the gas/liquid separation layer 2 and the anode passage plate 4 is disposed between the gas/liquid separation layer 2 and the anode passage plate 4, the liquid can be prevented from leaking to the gas passage 6 without forming any gap between the gas/liquid separation layer 2 and the anode passage plate 4, and reliability of such a gas/liquid separation structure can be improved. Moreover, no matter which direction the membrane electrode assembly 1 may be directed, $CO_2$ can be separated from the methanol solution, and can be discharged.

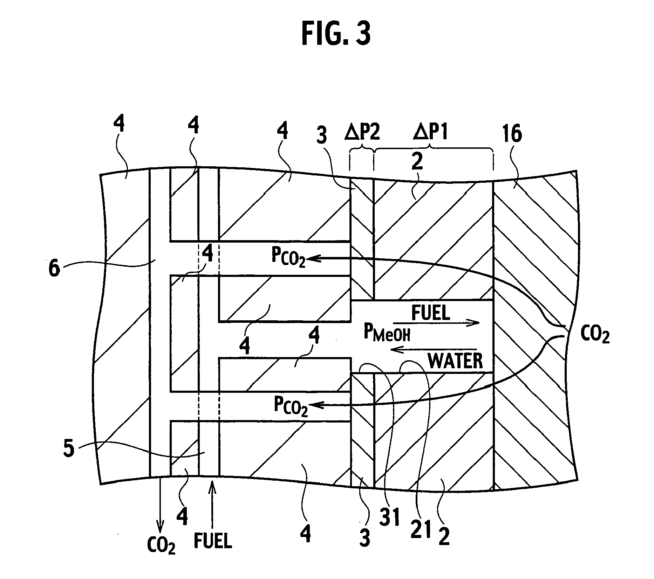

Furthermore, the auxiliary porous layer 3 has not only a packing effect but also functions as a fluid element for improving the reliability of the gas/liquid separation. As shown in FIG. 3, when a certain current is extracted, a generated amount of $CO_2$ in the anode reaction will be determined with respect to the current, and a pressure loss in the lyophobic gas/separation layer 2 and the auxiliary porous layer 3 will be determined. Here, as shown in Expression (3), a sum ($\Delta P_1 + \Delta P_2$) of the pressure loss $\Delta P_1$ when $CO_2$ passes through the gas/liquid separation layer 2 and the pressure loss $\Delta P_2$ when $CO_2$ passes through the auxiliary porous layer 3 is smaller than a pressure difference ($P_{MeOH} - P_{CO2}$) between the fuel passage 5 and the gas passage 6.

$$P_{MeOH} - P_{CO2} \geq \Delta P_1 + \Delta P_2 \quad \ldots (3)$$

When the pressure loss ($\Delta P_1 + \Delta P_2$) when $CO_2$ passes through the gas/liquid separation layer 2 and the auxiliary porous layer 3 is larger than the pressure difference ($P_{MeOH} - P_{CO2}$) between the fuel passage 5 and the gas passage 6, there is a possibility that $CO_2$ generated by the anode reaction may be emitted into the fuel passage 5. If the $CO_2$ is emitted into the fuel passage 5, this could result in breakage of the gas/liquid separation. Accordingly, the pressure loss ($\Delta P_1 + \Delta P_2$) is designed by the auxiliary porous layer 3 to control porosity thereof so that the pressure loss ($\Delta P_1 + \Delta P_2$) can be smaller than the pressure difference ($P_{MeOH} - P_{CO2}$) between the fuel passage 5 and the gas passage 6, whereby the reliability on the gas/liquid separation can be improved.

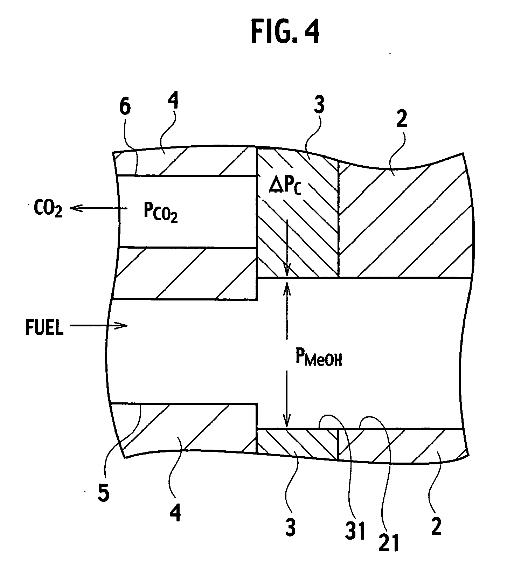

Moreover, as shown in FIG. 4, the auxiliary porous layer 3 suppresses entry of the liquid from the fuel passage 5 into the gas passage 6 by surface tension $\Delta P_c$, which is determined by a pore diameter of the auxiliary porous layer 3, a contact angle of the auxiliary porous layer 3 and a coefficient of the surface tension of the liquid. Here, as shown in Expression (4), the surface tension $\Delta P_C$ is larger than the pressure difference ($P_{MeOH} - P_{CO2}$) between the fuel passage 5 and the gas passage 6.

$$\Delta P_C > P_{MeOH} - P_{CO2} \quad \ldots (4)$$

When the surface tension $\Delta P_c$ is smaller than the pressure difference ($P_{MeOH} - P_{CO2}$) between the fuel passage 5 and the gas passage 6, there is a possibility that the gas/liquid separation is disrupted. A magnitude of the surface tension $\Delta P_c$ is controlled by using the auxiliary porous layer 3 to control the pore diameter thereof, whereby the reliability of the gas/liquid separation structure can be improved.

As described above, in accordance with the fuel cell according to the first embodiment of the present invention, the auxiliary porous layer 3 is disposed between the lyophobic gas/liquid separation layer 2 and the anode passage plate 4, whereby liquid leakage from the fuel passage 5 to the gas passage 6 can be prevented without forming any gap between the lyophobic gas/liquid separation layer 2 and the anode passage plate 4, and the reliability on the gas/liquid separation can be improved.

In an example of the fuel cell according to the first embodiment of the present invention, the anode passage plate 4 was fabricated, in which a width of the fuel passage 5 is 1 mm, a width of the gas passage 6 is 1 mm, and a land width is 0.8 mm. The anode passage plate 4 was pressed at a pressure of approximately 3.9 MPa while using carbon paper as the lyophobic gas/liquid separation layer 2 and an MPL with a thickness of 50 $\mu$m as the auxiliary porous layer 3. Then, the anode passage plate 4 was able to endure an inner pressure of the fuel passage 5 that was approximately 3 kPa. As a comparative example, when the auxiliary porous layer 3 was not provided, the gas/liquid separation was disrupted under an inner pressure of several ten Pa. As a result, it is understood that, thanks to the auxiliary porous layer 3, a resistance pressure of the gas/liquid separation structure is improved by approximately double digits.

(SECOND EMBODIMENT)

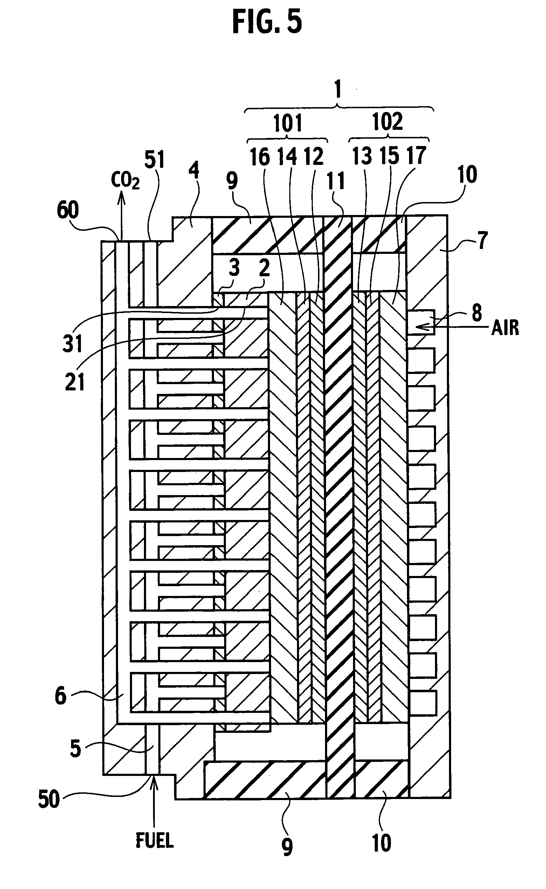

As shown in FIG. 5, a fuel cell according to a second embodiment of the present invention includes: the membrane electrode assembly (MEA) 1 with the electrolyte membrane 11, and the anode and cathode electrodes 101 and102 opposite toeachotherwhile sandwiching the electrolyte membrane 11 therebetween; the gas/liquid separation layer 2 that separates the fluid generated by the reaction due to the anode electrode 101 in the gas and the liquid; the anode passage plate 4 with the fuel passage 5 that supplies the fuel to the anode electrode 101, and the gas passage 6 that discharges gas therefrom; and the auxiliary porous layer 3 disposed between the gas/liquid separation layer 2 and the anode passage plate 4.

The second embodiment of the present invention is different from the first embodiment of the present invention in that a lyophilic porous layer is used as the gas/liquid separation layer 2. The carbon paper, the carbon cloth, the carbon nonwoven fabric, and the like are usable as the gas/liquid separation layer 2.

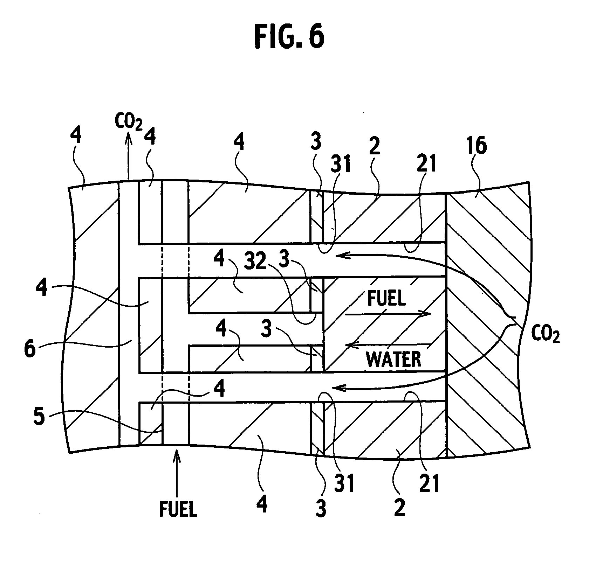

As shown in Fig. 6, the auxiliary porous layer 3 includes a first opening 31 being aligned with the opening of the gas/liquid separation layer 2 and passing the gas, and a second opening 32 facing with the gas/liquid separation layer 2.

The anode-side openings of the fuel passage 5 arepositionallyaligned with the second openings 32 of the auxiliary porous layer 3. Therefore, the auxiliary porous layer 3 does not inhibit the fuel supply from the fuelpassage 5 to the gas/liquidseparationlayer2. Theanode-side openings of the gas passage 6 are positionally aligned with the openings 21 of the lyophilic gas/liquid separation layer 2 and the first openings 31 of the auxiliary porous layer 3. Other structures in the fuel cell shown in FIG. 5 are substantially similar to those of the fuel cell shown in FIG. 1, and accordingly, a duplicate description will be omitted.

In the fuel cell according to the second embodiment of the present invention, as shown in FIG. 6, the methanol solution supplied from the fuel passage 5 is supplied through the openings 31 of the auxiliary porous layer 3, permeates the lyophilic gas/liquid separation layer 2, and is supplied to the anode electrode 101. The lyophilic gas/liquid separation layer 2 holds the methanol solution, and discharges $CO_2$ from the openings 21 thereof.

$CO_2$ generated by the anode reaction is discharged from the gas passage 6 through the openings 21 of the lyophilic gas/liquid separation layer 2 and the openings 31 of the auxiliary porous layer 3.

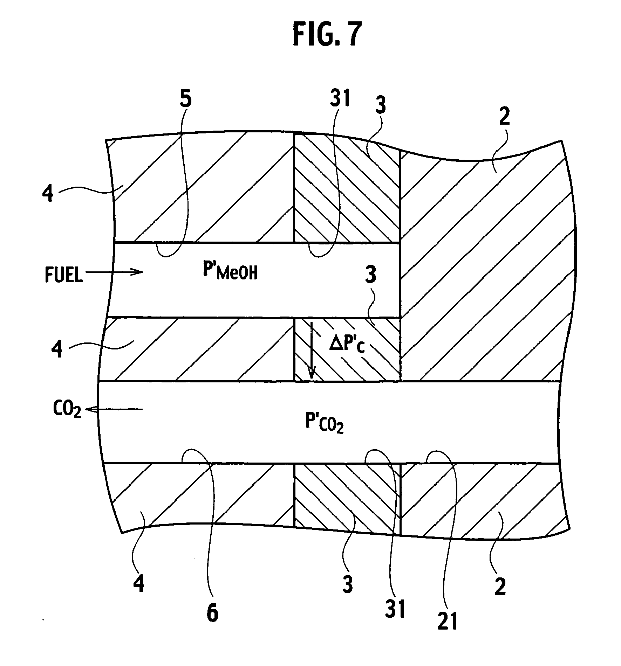

Here, as shown in FIG. 7, the auxiliary porous layer 3 suppresses the entry of the liquid from the fuel passage 5 into the gas passage 6 by the surface tension determined based on the pore diameter and contact angle of the auxiliary porous layer 3 and on the coefficient of the surface tension of the liquid. As shown in Expression (5), the surface tension $\Delta P'_c$ is larger than the pressure difference ($P'_{MeOH}-P'_{CO2}$) between the fuel passage 5 and the gas passage 6.

$$\Delta P'_c > P'_{MeOH} - P'_{CO2} \quad \ldots (5)$$

When the surface tension $\Delta P'_c$ is smaller than the pressure difference ($P'_{MeOH}-P'_{CO2}$) between the fuel passage 5 and the gas passage 6, it is possible that the gas/liquid separation maybe broken. The magnitude of the surface tension $\Delta P'_c$ is controlled by using the auxiliary porous layer 3 that can control the pore diameter thereof, whereby the liquid leakage from the fuel passage 5 to the gas passage 6 can be prevented, and the reliability of the gas/liquid separation structure can be improved.

As described above, in accordance with the fuel cell according to the second embodiment of the present invention, fuel leakage from the fuel passage 5 to the gas passage 6 can be prevented without forming any gap between the anode passage plate 4 and the lyophilic gas/liquid separat ion layer 2, and the reliability of the gas/liquid separation structure can improved.

(OTHER EMBODIMENT)

Various modifications will become possible for those skilled in the art after receiving the teachings of the present disclosure without departing from the scope thereof.

DMFC has been explained as a fuel cell system in the first and second embodiment of the present invention. However, the present invention may be applied to various fuel cell systems. Various alcohols, ethers or the like instead of methanol may be used as the fuel.

**Claims**

1. A fuel cell comprising:

   a membrane electrode assembly comprising an electrolyte membrane, and anode and cathode electrodes sandwiching the electrolyte membrane therebetween;
   a gas/liquid separation layer provided at an opposite side of the anode electrode with the electrolyte membrane, and configured to separate fluid generated by a reaction in the anode electrode into gas and liquid;
   an auxiliary porous layer provided on the gas/liquid separation layer; and
   an anode passage plate provided on the auxiliary porous layer, comprising a fuel passage supplying a fuel to the anode electrode and a gas passage discharging the gas,

   wherein the auxiliary porous layer is softer than the gas/liquid separation layer and the anode passage plate, and includes lyophobic, electric conductive and gas permeability properties.

2. The fuel cell of claim 1, wherein the gas/liquid separation layer has lyophobic and gas permeability properties.

3. The fuel cell of claim 2, wherein the gas/liquid separation layer and the auxiliary porous layer pass the gas and discharge the gas to the gas passage.

4. The fuel cell of claim 3, wherein a pressure loss generated when the gas passes the gas/liquid separation layer and the auxiliary porous layer is smaller than a pressure difference between the fuel passage and the gas passage.

5. The fuel cell of claim 2, wherein the gas/liquid separation layer comprises an opening passing the fuel.

6. The fuel cell of claim 5, wherein the auxiliary porous layer comprises an opening being aligned with the opening of the gas/liquid separation layer and passing the fuel.

7. The fuel cell of claim 2, wherein the gas passage comprises an opening facing with the auxiliary porous layer.

8. The fuel cell of claim 6, wherein the fuel passage comprises an opening being aligned with the opening of the gas/ liquid separation layer and the opening of the auxiliary porous layer.

9. The fuel cell of claim 1, wherein the gas/liquid separation layer has lyophilic property.

10. The fuel cell of claim 9, wherein the gas/liquid separation layerpasses the fuel and supplies the fuel to the anode electrode.

11. The fuel cell of claim 9, wherein a pressure difference between the fuel passage and the gas passage is smaller than a surface tension, the surface tension is determined by a pore diameter of the auxiliary porous layer and a coefficient of the surface tension of the fuel.

12. The fuel cell of claim 9, wherein the gas/liquid separation layer comprises an opening passing the gas.

13. The fuel cell of claim 12, wherein the auxiliary porous layer comprises a first opening being aligned with the opening of the gas/liquid separation layer and passing the gas.

14. The fuel cell of claim 13, wherein the gas passage comprises an opening being aligned with the first opening.

15. The fuel cell of claim 12, wherein the auxiliary porous layer comprises a second opening facing with the gas/liquid separation layer.

16. The fuel cell of claim 15, wherein the fuel passage comprises an opening being aligned with the second opening.

17. The fuel cell according to any preceding claim, wherein the anode electrode comprises an anode catalyst layer, a carbon micro porous layer and an anode gas diffusion layer.

18. The fuel cell according to any preceding claim, wherein the cathode electrode comprises a cathode catalyst layer, a carbon micro porous layer and a cathode gas diffusion layer.

**19.** The fuel cell according to any preceding claim, further comprising a cathode collector disposed on an outside of the cathode electrode.

**20.** The fuel cell of claim 19 , wherein the cathode collector supplies an air to the cathode electrode and collects current.

# FIG. 1

# FIG. 2

# FIG. 3

# FIG. 4

# FIG. 5

# FIG. 6

# FIG. 7

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 422 716 A (INTELLIGENT ENERGY LTD [GB]) 2 August 2006 (2006-08-02) * page 5, line 17 - page 9, line 11 * * page 11, lines 15-20; figure 2 * ----- | 1-20 | INV. H01M4/86 H01M8/02 ADD. H01M8/10 |
| X | WO 2006/069249 A (GINER ELECTROCHEMICAL SYSTEMS [US]; LIU HAN [US]; MCDONALD ROBERT C [U]) 29 June 2006 (2006-06-29) * page 7, line 16 - page 13, line 27; figures 3-7 * ----- | 1-3,5,7, 9,10,12, 15,17-20 | |
| A | US 2005/255373 A1 (KIMURA HIDEKAZU [JP] ET AL) 17 November 2005 (2005-11-17) * the whole document * ----- | 1-20 | |
| A | US 2006/127738 A1 (SOMPALLI BHASKAR [US] ET AL) 15 June 2006 (2006-06-15) * the whole document * ----- | 1-20 | |

TECHNICAL FIELDS
SEARCHED (IPC)

H01M

The present search report has been drawn up for all claims

| Place of search | Date of completion of the search | Examiner |
|---|---|---|
| Munich | 30 June 2008 | Brune, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..............................................................................
& : member of the same patent family, corresponding
   document

EPO FORM 1503 03.82 (P04C01)

## EP 1 978 581 A1

### ANNEX TO THE EUROPEAN SEARCH REPORT
### ON EUROPEAN PATENT APPLICATION NO.

EP 08 25 0923

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2008

| Patent document cited in search report | | Publication date | Patent family member(s) | | Publication date |
|---|---|---|---|---|---|
| GB 2422716 | A | 02-08-2006 | AR | 052364 A1 | 14-03-2007 |
| | | | CA | 2595342 A1 | 03-08-2006 |
| | | | CN | 101107739 A | 16-01-2008 |
| | | | EP | 1844509 A1 | 17-10-2007 |
| | | | WO | 2006079781 A1 | 03-08-2006 |
| | | | KR | 20070107054 A | 06-11-2007 |
| | | | US | 2008145738 A1 | 19-06-2008 |
| WO 2006069249 | A | 29-06-2006 | NONE | | |
| US 2005255373 | A1 | 17-11-2005 | CN | 1679188 A | 05-10-2005 |
| | | | WO | 2004006364 A1 | 15-01-2004 |
| | | | JP | 3760895 B2 | 29-03-2006 |
| | | | JP | 2004039416 A | 05-02-2004 |
| US 2006127738 | A1 | 15-06-2006 | CN | 101116205 A | 30-01-2008 |
| | | | DE | 112005002974 T5 | 25-10-2007 |
| | | | US | 2007209758 A1 | 13-09-2007 |
| | | | WO | 2006065365 A2 | 22-06-2006 |

EPO FORM P0459

For more details about this annex : see Official Journal of the European Patent Office, No. 12/82

**EP 1 978 581 A1**

**REFERENCES CITED IN THE DESCRIPTION**

**Patent documents cited in the description**

- JP P2007080317 B